# EUROPÄISCHE PATENTSCHRIFT

(11) **EP 2 352 044 B1**
(45) Veröffentlichungstag und Bekanntmachung des Hinweises auf die Patenterteilung: **19.06.2019**
(21) Anmeldenummer: 11152328.8
(22) Anmeldetag: 27.01.2011
(51) Int. Cl.: G02B 6/00, F21V 8/00

(54) **Anordnung zur Lichtabgabe**
Assembly for emitting light
Agencement d'émission de lumière

(30) Priorität: 27.01.2010 DE 102010001266
(43) Veröffentlichungstag der Anmeldung: 03.08.2011
(73) Patentinhaber: Zumtobel Lighting GmbH, 6850 Dornbirn (AT)
(72) Erfinder: Keller, Katharina, 88131 Lindau (DE); Schwärzler, Erich, 6941 Langenegg (AT)
(74) Vertreter: Thun, Clemens

(56) Entgegenhaltungen:
- DE-A1-102009 005 351
- US-A1- 2008 186 733
- US-A1- 2009 027 588

## Beschreibung

Die vorliegende Erfindung betrifft eine Anordnung zur Lichtabgabe für die Raumbeleuchtung mit einer Lichtquelle sowie plattenförmigen Lichtleitelementen. Ferner weisen die Lichtleitelemente Lichtauskoppelstrukturen zur Lichtabstrahlung auf. Ein weiterer Aspekt der Erfindung betrifft eine Leuchte mit einer erfindungsgemäßen Anordnung zur Lichtabgabe.

Bei Leuchten oder Leuchtenanordnungen, welche zur Lichtabgabe über größere Flächen bestimmt sind, ist die Verbesserung der homogenen Lichtabstrahlung ein Schwerpunkt ständiger Entwicklung. Um die angestrebte, homogene Lichtabgabe über eine große Fläche aufrecht erhalten zu können, sind - angepasst an verschiedenartige Lichtquellen - eine Reihe von Lösungen vorgeschlagen worden. Neben einer großen Zahl an Lichtquellen, welche über Reflektoranordnungen zur Hinterleuchtung einer Lichtaustrittsfläche vorgesehen sind, eignen sich insbesondere auch Lichtleiter zur homogenen Lichtabgabe.

Die Abstrahlung des Lichts aus einem Lichtleiter kann einerseits in Richtung der Lichtleitung erfolgen. Zur Lichtabgabe über große Flächen ist jedoch gewöhnlich eine Lichtabstrahlung eines einzelnen Lichtleiters quer zur Richtung der Lichtleitung vorgesehen. Dazu weist der Lichtleiter Lichtauskoppelelemente auf, welche üblicherweise parallel zur Richtung der Lichtleitung orientierte Grenzflächen des Lichtleiters so modifizieren, dass keine Rückstrahlung in den Lichtleiter erfolgt, sondern das Licht an dieser Stelle so gebeugt, reflektiert oder gestreut wird, dass es aus dem Lichtleiter austritt.

Über den Weg der Lichtleitung hinweg muss - zur homogenen Beleuchtung - eine konstante Lichtintensität ausgekoppelt werden. Selbst bei einem idealen Lichtleiter kann aufgrund des Auskoppelvorgangs jedoch innerhalb des Lichtleiters nicht von einer konstanten Lichtintensität ausgegangen werden, welche zur Auskopplung zur Verfügung steht. Daher ist es üblich die Verteilung der Lichtauskoppelelemente - und damit die Auskoppelrate - an die zur Verfügung stehende Lichtintensität anzupassen; in vielen Fällen, und besonders in Verbindung mit weiteren optischen Elementen, erweist es sich als äußerst schwierig eine homogene Lichtabstrahlung zu erreichen.

Die DE 10 2009 005 351 A1 beschreibt elektrische Lampen mit Lichtleitertechnologie, die Lichtauskopplungselemente (als Deflektoren bezeichnet) in Form von Einkerbungen oder Vorsprüngen aufweist und beschreibt insbesondere die kontrollierte Deflektor-basierte Auskopplung von Licht aus (plattenförmigen) Lichtleitern allgemein.

Die US 2008/0186733 A1 offenbart eine LED-Konstruktion, die die Lichtnutzungseffizienz bzw. die Lichtemissionseffizient verbessert, unter anderem durch eine Erhöhung des Lichtemissionswinkels. Im Rahmen einer speziellen Anwendungsform wird das Licht einer Reihe von LED's dieser Art in die Stirnseite einer Lichtleiterplatte so eingestrahlt, dass dieses in Form konstant gestreuten Lichtes aus nur einer Seite der Lichtleiterplatte herausreflektiert wird.

Die US 2009/027588 A1 offenbart ein LCD-System (**L**iquid **C**rystal **D**isplay) mit mehreren Lichtquellen (z.B. LED-Lichtquellen), die über unterschiedliche Lichteintrittsbereiche mit mindestens einem Lichtwellenleiterelement gekoppelt sind, um einen LCD-Bildschirm zu hinterleuchten. Dazu werden Wellenleiter bereitgestellt, die aufgrund ihrer teilweise unterschiedlichen Konfiguration und Anordnung (z.B. geschichteter Aufbau mit jeweiligen transmissiven Abschnitten sowie mit Lücken oder Löchern, durch die weiteres Licht zusätzlich eingebracht werden kann) eine homogene Beleuchtung (z.B. eines Flachbildschirms) realisieren sollen.

Aufgabe der vorliegenden Erfindung ist es also die Lichtabgabe so zu verbessern und insbesondere so leicht anpassbar zu gestalten, dass eine homogene Lichtabstrahlung aus einer Anordnung zur Lichtabgabe erzielt werden kann. Insbesondere betrifft dies die Lichtabstrahlung über große Flächen.

Diese Aufgabe wird durch eine Anordnung zur Lichtabgabe mit den Merkmalen des Anspruchs 1 gelöst. Weiterbildungen der Erfindung sind Gegenstand der abhängigen Ansprüche.

Gemäß dem ersten unabhängigen Anspruch wird eine Anordnung beansprucht, zur Lichtabgabe für die Raumbeleuchtung, mit mindestens einer Lichtquelle, vorzugsweise einer LED-Lampe, und zumindest zwei plattenförmigen Lichtleitelementen, welche jeweils eine Lichteintrittsfläche, durch welche Licht in das Lichtleitelement einkoppelbar ist, sowie eine Lichtaustrittsfläche aufweisen, wobei in die Lichtleitelemente über die Lichteintrittsfläche eingekoppeltes Licht in einer Vorzugsrichtung der Lichtleitung im Wesentlichen parallel zu der jeweiligen Lichtaustrittsfläche geführt und mit Hilfe von in bzw. an dem Lichtleitelement vorgesehenen Lichtauskoppelstrukturen über die jeweilige Lichtaustrittsfläche abgegeben wird.

Hierbei sind die Lichtleitelemente im Wesentlichen parallel zueinander ausgerichtet und weisen die gleiche Lichtabstrahlrichtung auf. Die Lichtleitelemente sind in Lichtabstrahlrichtung hintereinander angeordnet; von der Lichtquelle abgegebenes Licht wird gleichzeitig in mehrere Lichtleitelemente der Anordnung eingekoppelt. Die Lichtleitelemente weisen fernerhin Lichtauskoppelbereiche auf, in denen mehrere Lichtauskoppelstrukturen so ausgebildet sind, dass die jeweilige räumliche Dichte der Lichtauskoppelstrukturen konstant ist.

Die Erfindung ist dadurch gekennzeichnet, dass die Lichtauskoppelbereiche so angeordnet sind, dass die Projektionen der Lichtauskoppelbereiche in der gemeinsamen Richtung der Lichtabstrahlung überlappen, sodass die Gesamtheit der Lichtauskoppelstrukturen eine zunehmende räumliche Dichte mit zunehmender Entfernung von dem Ort der zugeordneten Lichtquelle aufweist.

Mit Hilfe der erfindungsgemäß vorgesehenen Vielzahl von Lichtleitelementen ist es durch Zusammenwirken der Lichtelemente möglich, die Lichtabgabe so zu gestalten, dass - selbst über große Flächen - eine homogene Lichtabgabe bei jeweils konstanter Lichtauskoppelrate eines Lichtleitelements erreicht wird.

Die Lichtauskoppelrate kann so mit zunehmender Entfernung zu der Lichtquelle erhöht werden Durch das erfindungsgemäße Zusammenwirken verschiedener Lichtleitelemente zur homogenen Lichtabgabe ist es auf einfache Art und Weise möglich die räumlichen Dichte der Lichtauskoppelstrukturen dadurch zu erreichen, dass weitere Lichtauskoppelstrukturen oder Lichtauskoppelbereiche auf verschiedene Lichtleitelemente verteilt werden.

Somit ist es erfindungsgemäß möglich das Licht einer Lichtquelle mit Hilfe mehrerer Lichtleitelemente so aufzuteilen, dass es an verschiedene Orte der Lichtabgabe ohne Intensitätsverlust geführt werden kann. In einer kostengünstigen Variante kann dies beispielsweise durch Lichtleitelemente, welche als transparente Platten beispielsweise aus PMMA ausgebildet sind, gewährleistet werden. Vorzugsweise ist die Lichteintrittsfläche durch eine Schmalseite der Platte und die Lichtaustrittsfläche durch eine orthogonal zur Schmalseite orientierte Breitseite realisiert.
Ebenso sind zur Herstellung der Lichtleitelemente andere, vorzugsweise transparente Materialien denkbar, welche beispielsweise auch eine spektrale Filterwirkung aufweisen können. Ein hochwertiges Ausführungsbeispiel könnte beispielsweise mit Polycarbonat oder Glas verwirklicht sein.

Als Lichtquelle sind vorzugsweise LEDs vorgesehen, jedoch ist die Erfindung nicht darauf beschränkt. Jegliche anderen punktförmigen sowie auch länglichen Lichtquellen bieten sich an. Beispielsweise kann es sich dabei um Halogen- oder auch Leuchtstofflampen handeln.

Um ein möglichst effektives Einkoppeln des von der Lichtquelle abgestrahlten Lichts in die Lichtleitelemente zu ermöglichen, ist es vorteilhaft, eine an die Lichtquelle angepasste Lichteintrittsfläche der Lichtleitelemente zu wählen. Es ist beispielsweise denkbar, dass die Lichteintrittsfläche - jeweils einzeln oder vorzugsweise auch in der Gesamtheit der Lichteintrittsflächen - im Wesentlichen parallel einem Außenumfang der Lichtquelle folgt. Dadurch kann gewährleistet werden, dass ein möglichst großer Anteil des von der Lichtquelle abgestrahlten Lichts in die Vorzugsrichtung der Lichtleitung gebeugt wird und somit nahezu verlustfrei im Lichtleiter geführt werden kann.

Neben der Idee der verlustfreien Lichtleitung mit Hilfe mehrerer Lichtleitelemente bis zum Ort der Lichtabgabe, kommt eine besondere Bedeutung der Auskopplung einer homogenen Lichtintensität zu.

Darüber hinaus ist die Integration von Streulicht in die Gesamtlichtabgabe von wesentlicher Bedeutung für das Zusammenwirken einer Vielzahl von Lichtleitelementen.

Zum einen kann sichergestellt werden, dass die Gesamtlichtabstrahlung nicht wesentlich durch einen Streulichtanteil geprägt wird. Dazu könnte weiterhin vorgesehen sein, dass die Lichtauskoppelstrukturen so angeordnet sind, dass die durch die gemeinsame Richtung der Lichtabstrahlung festgelegte Flächenprojektion der Lichtleitelemente durch die Gesamtheit der Lichtauskoppelstrukturen vollständig bedeckt ist.

Zur einfacheren Beherrschbarkeit von Streulichteffekten kann fernerhin in einer Weiterbildung der Erfindung vorgesehen sein, dass alle Lichtauskoppelstrukturen an jeweils der gleichen Seite des entsprechenden plattenförmigen Lichtleitelements angeordnet sind. Dies ist besonders vorteilhaft, wenn die Anordnung zur Lichtabgabe mehr als zwei Lichtleitelemente aufweist, und so die Streukegel oder Beugungsbereiche einer Vielzahl von Ebenen zu berücksichtigen sind.

Darüber hinaus kann in einer anderen Ausgestaltung der Erfindung der Einfluss von Streulichteffekten dadurch verbessert werden, dass räumlich benachbarte Lichtauskoppelstrukturen, welche auf unterschiedlichen Lichtleitelementen angeordnet sind, auf benachbarten Seiten der plattenförmigen Lichtleitelemente angeordnet sind.

Weiterhin kann das Zusammenwirken der Lichtleitelemente beispielsweise dadurch verbessert werden, dass senkrecht zur Vorzugsrichtung der Lichtleitung, eine Dicke der Lichtleitelemente an eine Entfernung eines Orts der zugeordneten Lichtquelle von Lichtauskoppelbereichen, welche jeweils mehrere Lichtauskoppelstrukturen aufweisen, angepasst ist. Dabei sind verschiedene Aspekte zu berücksichtigen.

Häufig könnte zur Unterstützung einer homogenen Lichtabgabe weit entfernt von der Lichtquelle eine relativ geringe unterstützende Lichtintensität ausgekoppelt werden. In diesem Fall können die zur unterstützenden Lichtabgabe weit von der Lichtquelle bestimmten Lichtleitelemente in der Dicke gering gegenüber Lichtleitelementen gewählt werden, welche Licht bereits nahe an der Lichtquelle auskoppeln. Vorteilhaft kann dabei durch die geringe Dicke der unterstützenden Lichtleitelemente eine Vielzahl von Lichtleitelementen eine Vielzahl von Orten zur unterstützenden Lichtabgabe festlegen. Somit ist die homogene Lichtabgabe entscheidend verbessert.

Darüber hinaus kann jedoch auch vorgesehen sein die Dicke der Lichtleitelemente so zu wählen, dass mit zunehmender Entfernung der Lichtauskoppelstrukturen vom Ort der zugeordneten Lichtquelle auch die Dicke des betreffenden Lichtleitelements größer gegenüber einem Lichtleitelement gewählt wird, welches Licht im Vergleich nahe an der Lichtquelle abstrahlt. Somit kann über die Wahl der Dicke eine größere Intensität zu einem entfernten Ort von der Lichtquelle geführt werden und über die resultierende Intensitätsmodulation eine homogene Lichtabstrahlung erreicht werden.

Die vorliegende Erfindung nutzt die verlustfreie Lichtleitung bis zum Ort der Lichtabgabe, um das Zusammenwirken mehrerer Lichtleitelemente zu optimieren. Die Lichtleitelemente weisen deshalb im Wesentlichen unabhängige Lichtleiteigenschaften zur Führung des über die Lichteintrittsfläche eingekoppelten Lichts der zugeordneten Lichtquelle auf. In vorteilhafter Weise kann das Zusammenwirken der Lichtleitelemente nunmehr dadurch verbessert werden, dass die Lichtleitelemente jeweils im Bereich der Lichtauskoppelstrukturen so miteinander in Kontakt stehen, dass die in der gemeinsamen Richtung der Lichtabstrahlung folgenden Lichtleitelemente im Wesentlichen verlustfrei durchstrahlt werden.

In einer Weiterbildung des Erfindungsgedankens kann sowohl die verlustfreie Lichtleitung als auch eine einfache Auskopplung des geführten Lichts dadurch erreicht werden, dass die Lichtleitelemente senkrecht zu einer Vorzugsrichtung der Lichtleitung Verspiegelungen aufweisen.

Einerseits könnte vorgesehen sein, in Richtung der gemeinsamen Lichtabstrahlung eine Reflexionswirkung hervorzurufen, um so das geführte Licht aus dem Lichtleiter auszukoppeln. Insbesondere bietet es sich an, Licht, welches entgegengesetzt der gemeinsamen Richtung der Lichtabstrahlung aus der Anordnung zur Lichtabgabe austreten würde, durch eine Verspiegelung in Richtung der gemeinsamen Lichtabgabe zu lenken und so einen Reflektor zu realisieren.

Andererseits ist ebenso denkbar die verlustfreie Lichtleitung dadurch zu unterstützen, dass Verspiegelungen - möglicherweise in ihrem Zusammenwirken - eine Rückkopplung des geführten Lichts in das jeweilige Lichtleitelement ermöglichen. Dies ist möglicherweise besonders vorteilhaft in gewölbten Abschnitten der plattenförmigen Lichtleitelemente. Vorzugsweise könnte die Rückkopplung durch Verspiegelungen erfolgen, welche auf benachbarten Lichtleitelementen angeordnet sind.

Um eine einfache Anpassbarkeit der Richtung der Lichtabstrahlung zu gewährleisten, ist darüber hinaus beispielsweise vorgesehen, dass die Anordnung zur Lichtabgabe eine Prismenplatte aufweist. Dabei erweist sich die Kombination einer Prismenplatte in Verbindung mit mehreren Lichtelementen als besonders geeignet um störende Moire-Effekte zu vermeiden und dennoch die Funktion der Lichtlenkung auszuüben. Mit Hilfe mehrerer Lichtleitelemente lassen sich ungünstige Verhältnisse von Regelmäßigkeiten der Prismenplatte zu Regelmäßigkeiten der Lichtauskoppelstrukturen besonders effizient vermeiden.

Fernerhin kann vorgesehen sein, dass die erfindungsgemäße Anordnung zur Lichtabgabe in oder an einem Gehäuse einer Leuchte angebracht ist. Vorzugsweise handelt es sich dabei um eine Leuchte, welche eine im Verhältnis zur Bauhöhe relativ große Lichtaustrittsöffnung aufweist.

In einem bevorzugten Ausführungsbeispiel weist die Leuchte, in Richtung der Lichtabgabe gesehen, hinter den Lichtleitelementen einen Reflektor auf. Dieser ist beispielsweise dazu ausgebildet, Licht, welches entgegen die vorgesehene gemeinsame Lichtabstrahlungsrichtung die Anordnung zur Lichtabgabe verlassen würde, in die Richtung der gemeinsame Lichtabstrahlung zurückzukoppeln. Beispielsweise könnte der Reflektor abschnittsweise parabolisch ausgebildet sein, in der Art, dass die Anordnung zur Lichtabgabe im Wesentlichen im Brennpunkt der Parabel angeordnet ist.

Nachfolgend soll die Erfindung anhand der beiliegenden Zeichnung näher erläutert werden, wobei gleiche Elemente in allen Darstellungen mit den gleichen Bezugszeichen versehen sind. Es zeigen:
- Figur 1:: ein Ausführungsbeispiel einer Leuchte;
- Figur 2:: ein Ausfiihrungsbeispiel einer Anordnung zur Lichtabgabe;
- Figur 3a-3c:: weitere Ausführungsbeispiele einer Anordnung zur Lichtabgabe;
- Figur 4:: ein Ausführungsbeispiel eines Lichtleitelements;
- Figur 5:: ein Ausführungsbeispiel einer Anordnung von Lichtleitelementen;
- Figur 6:: ein nicht erfindungsgemäßes Ausführungsbeispiel für die Anordnung von Lichtauskoppelstrukturen;
- Figur 7:: ein erfindungsgemäßes Ausführungsbeispiel für die Variation der räumlichen Dichte von Lichtauskoppelstrukturen;
- Figur 8:: ein Ausführungsbeispiel für die Anpassung der Dicke der Lichtleitelemente;
- Figur 9:: ein weiteres Ausführungsbeispiel für die Anordnung von Lichtauskoppelstrukturen;
- Figur 10:: ein Ausführungsbeispiel für Verspiegelungen der Lichtleitelemente; und
- Figur 11:: ein Ausführungsbeispiel für Lichteinkoppelflächen der Lichtleitelemente.

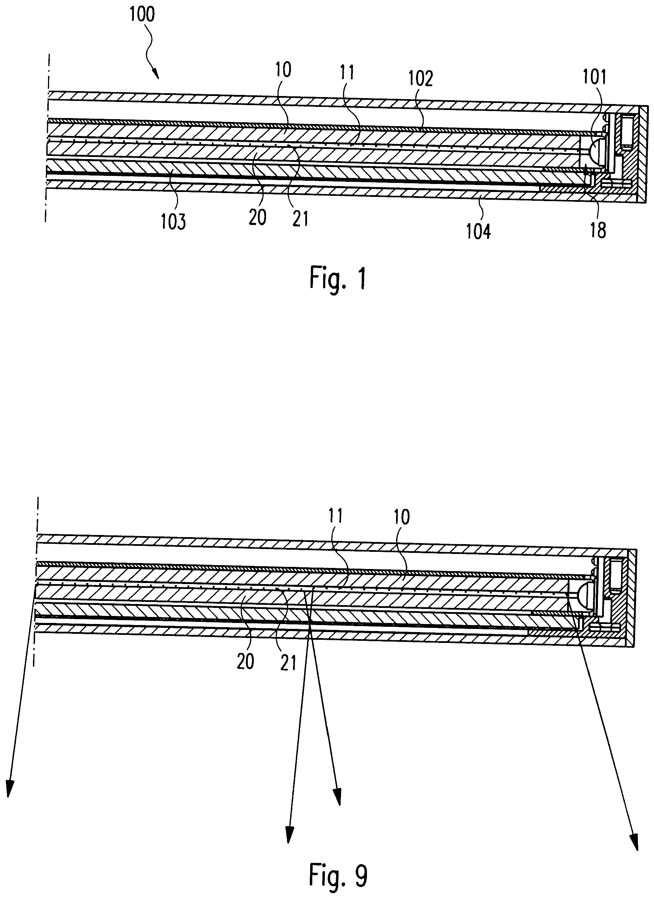

Figur 1 zeigt abschnittsweise ein Ausführungsbeispiel einer Leuchte 100, welcher aufgrund ihrer sehr flachen Bauhöhe, vielfältige Einsatzmöglichkeiten zugedacht sein können. Beispielsweise können nicht dargestellte Halteelemente die Verwendung als Einbau-, Decken-, Pendel- oder Wandleuchte ermöglichen.

Ihre charakteristische flache Bauform von nur wenigen Zentimetern Bauhöhe bringt jedoch die Randbedingung mit sich, dass eine optimale Reflektorkonstruktion, welche eine homogene Lichtabstrahlung über eine große Lichtaustrittsöffnung ermöglicht, nicht vorgesehen werden kann.

Neben einem flachen Reflektor 102 und einer transparenten Halteplatte 104, weist die Leuchte darüber hinaus auch eine Prismenplatte 103 auf. Diese kann dazu bestimmt sein die gewöhnlich einem leistungsfähigen Reflektor zugedachte Funktion der Lichtlenkung ausüben.

Das Erfordernis der Aufweitung des Lichts einer Lichtquelle 101 zur homogenen Abstrahlung über eine Lichtaustrittsöffnung der Leuchte 100 kann jedoch durch die dargestellte Kombination aus flachem Reflektor 102 und Prismenplatte 103 nicht erfüllt werden.

Deshalb ist eine Ergänzung der Leuchte mit einer erfindungsgemäßen Anordnung zur Lichtabgabe vorgesehen.

Diese weist mindestens eine Lichtquelle 101, im Ausführungsbeispiel eine LED-Lampe, sowie zwei oder mehrere plattenförmige Lichtleitelemente 10 bzw. 20 auf. Dabei sind an den beiden Lichtleitelementen 10 bzw. 20 jeweils eine Lichteintrittsfläche 18, durch welche Licht in das Lichtleitelement 10 bzw. 20 einkoppelbar ist, sowie eine Lichtaustrittsfläche vorgesehen. Darüber hinaus führen die beiden Lichtleitelemente 10 und 20 über die jeweiligen Lichteintrittsflächen 18 gleichzeitig eingekoppeltes Licht in einer Vorzugsrichtung der Lichtleitung I im Wesentlichen parallel zu der jeweiligen Lichtaustrittsfläche nahezu verlustfrei. Mit Hilfe von Lichtauskoppelstrukturen 11 bzw. 21 wird das geführte Licht über die jeweilige Lichtaustrittsfläche abgegeben. Hervorzuheben ist, dass die Lichtleitelemente 10 und 20 eine gemeinsame Richtung der Lichtabstrahlung II aufweisen. Fernerhin sind die Lichtleitelemente 10 und 20 in dieser Richtung hintereinander angeordnet, und darüber hinaus im Wesentlichen parallel zueinander orientiert. Die wenigstens eine Lichtquelle 101 ist dabei mehreren Lichtleitelementen 10 und 20 zugeordnet und so angeordnet, dass von der Lichtquelle 101 abgegebenes Licht gleichzeitig in beide Lichtleitelemente 10 und 20 der Anordnung eingekoppelt wird.

Mit Hilfe der erfindungsgemäßen Anordnung zur Lichtleitung ist eine Aufteilung des von einer Lichtquelle 101 abgestrahlten Lichts in mehrere Lichtleitelemente 10 und 20 vorgesehen. Diese können gemeinsam an einem bestimmten Ort des Lichtaustritts aus der Leuchte 100 zur abgestrahlten Lichtintensität beitragen. Dabei können die jeweiligen Lichtleitelemente 10 bzw. 20 - über den Verlauf des Lichtwegs hinweg - zueinander unterschiedliche Lichtintensitätsverluste aufweisen, welche im Wesentlichen durch die Anordnung und Ausgestaltung der Lichtauskoppelstrukturen 11 bzw. 21 über den Verlauf der Lichtführung im Lichtleitelement 10 bzw. 20 bestimmt sind. Aufgrund der Möglichkeit, mit mehreren Lichtleitelementen an jedem Ort des Lichtaustritts aus der Leuchte 100 die ausgekoppelte Lichtintensität gezielt anpassen zu können, ist in einfacher Weise eine Verbesserung einer homogenen Lichtabgabe möglich.

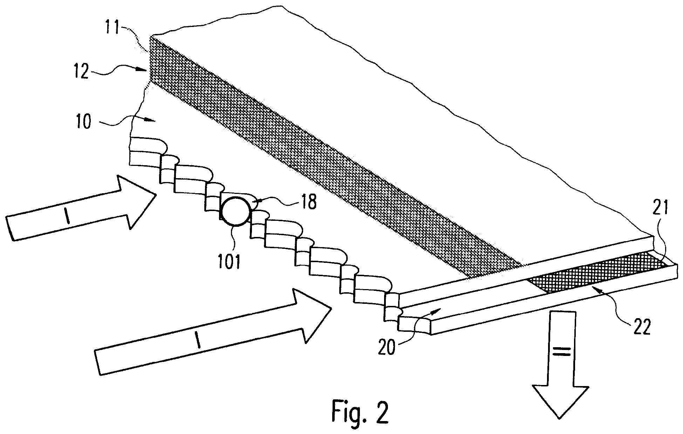

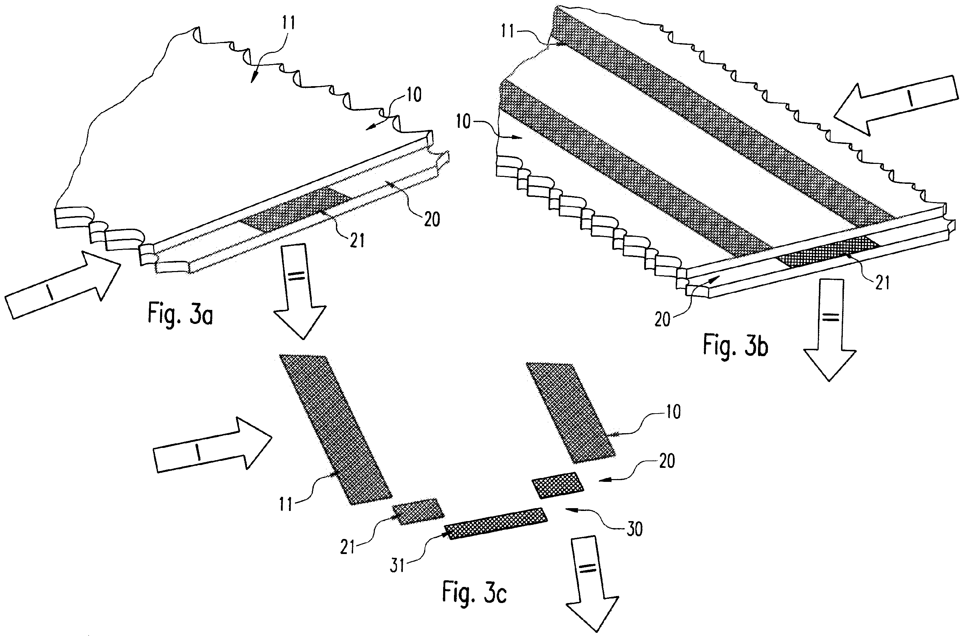

Die Figuren 2, und 3a)-c) zeigen dabei verschieden Ausgestaltungsvarianten einer Anordnung von Lichtleitelementen, wie sie in verschiedenen Ausführungsbeispielen oder in Kombination vorgesehen sein könnten. Dabei sind mehrere Aspekte des Zusammenwirkens skizziert.

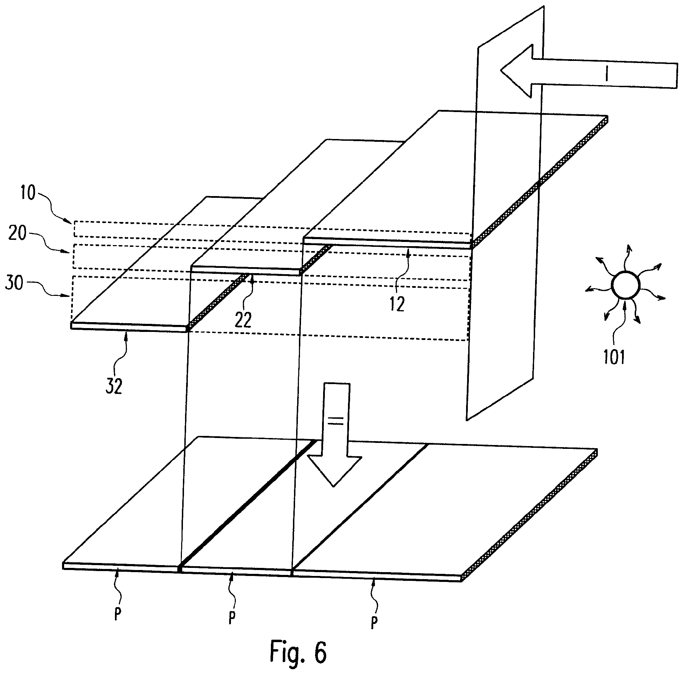

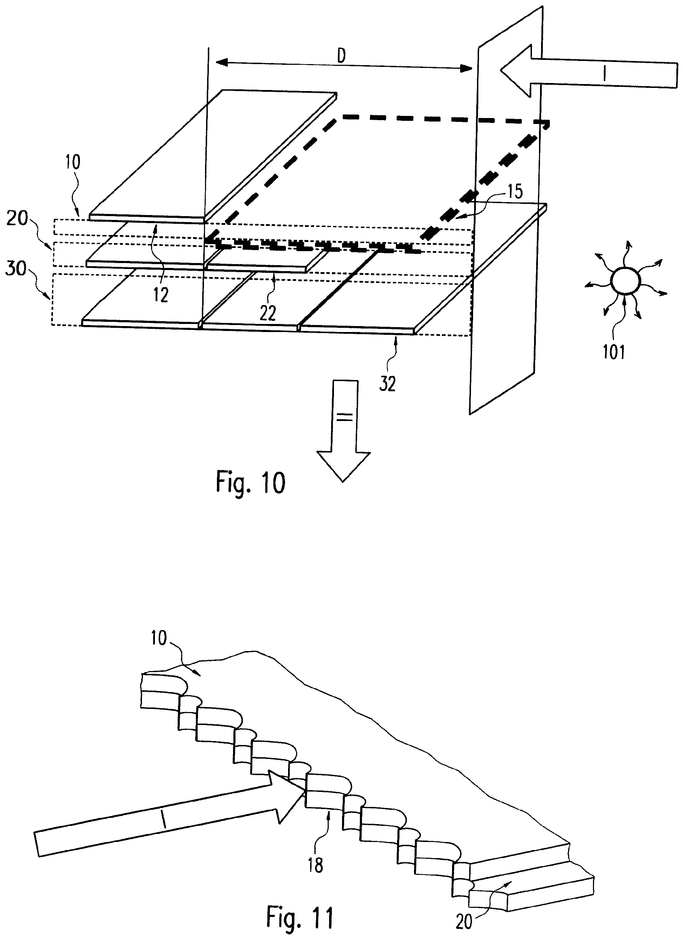

Figur 2 zeigt eine Anordnung zur Lichtabgabe, mit einer Lichtquelle 101, welche Licht seitlich in die jeweiligen Lichteintrittsflächen 18 zweier hintereinander angeordneter Lichtleitelemente 10 bzw. 20 einstrahlt. Die Form der Lichteintrittsflächen 18 - welche insbesondere nochmals in Figur 11 hervorgehoben ist - folgt dabei vorzugsweise parallel einem Außenumfang einer Lichtquelle 101, um eine Lichteinkopplung in Richtung einer Vorzugsrichtung der Lichtleitung I zu unterstützen. Die Lichtleitelemente 10 bzw. 20 sind aus transparenten Platten aus PMMA mit im Wesentlichen rechteckigem Querschnitt gebildet. Die planparallele Form der Platten erweist sich zwar als günstige Ausführungsform zur nahezu verlustfreien Lichtleitung, jedoch sind auch abweichende, im Wesentlichen plattenförmige Ausbildungen denkbar. Beispielsweise könnten die Platten parallel zu einer gewölbten Vorzugsrichtung der Lichtleitung I ebenfalls gewölbt sein. Weiterhin weisen die Lichtleitelemente 10 und 20 Lichtausauskoppelbereiche 12 bzw. 22 auf, welche jeweils aus mehreren Lichtauskoppelstrukturen 11 bzw. 21 gebildet werden. Einerseits können die Lichtauskoppelbereiche 12 und 22 in nicht erfindungsgemäßen Ausführungsbeispielen so angeordnet sein, dass die Projektion P der Lichtauskoppelbereiche 12 und 22 nicht überlappt. Dies ist, neben den in den Figuren 2, 3b und 3c dargestellten Ausführungsbeispielen, insbesondere in Figur 6 nochmals verdeutlicht. Das in einer Vorzugsrichtung der Lichtleitung I eingekoppelte Licht wird durch die Lichtleitelemente 10, 20 bzw. 30 ohne wesentlichen Intensitätsverlust bis zum jeweiligen Ort der Lichtauskopplung geführt.

Die Lichtauskoppelstrukturen 11, 21 und 31 sind in Lichtauskoppelbereichen 12, 22 bzw. 32 angeordnet, welche so orientiert sind, dass ihre Projektion P in Richtung der Lichtabstrahlung II nicht überlappt. Dies kann sich als besonders günstig erweisen um Streulichteffekte zu kontrollieren.

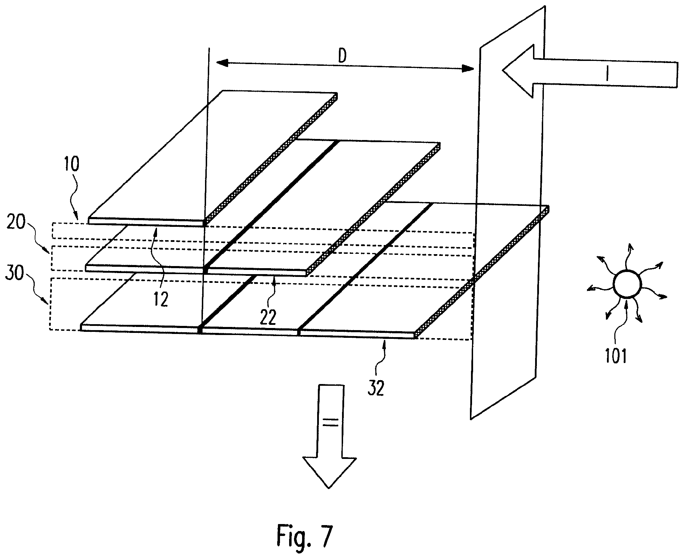

Erfindungsgemäß ist gemäß Figur 3a und Figur 7 jedoch vorgesehen, dass die Projektionen P (Figur 6) der Lichtauskoppelbereiche 12, 22 bzw. 32 überlappen. In besonders einfacher Art und Weise ergibt sich somit die Möglichkeit die Lichtabstrahlung aus Lichtauskoppelbereichen, welche auf einem einzelnen Lichtleitelement 10, 20 bzw. 30 eine große Fläche einnehmen, zu ergänzen. Beispielsweise kann vorgesehen sein, dass das Lichtleitelement 10 (Fig. 3a) bzw. 30 (Fig. 7), mit Lichtauskoppelbereichen 12 bzw. 32 großer Fläche eine Basislichtabstrahlung festlegt, welche jedoch mit zunehmender Entfernung von der Lichtquelle 101 an Intensität abnehmen kann. Um eine homogene Lichtabstrahlung dennoch zu ermöglichen, sind die Lichtabstrahlung ergänzende Lichtauskoppelbereiche 12 und 22 (Figur 7) vorgesehen, welche so angeordnet sind, dass die Projektionen der Lichtauskoppelbereiche in der gemeinsamen Richtung der Lichtabstrahlung II überlappen. Somit ist eine Zunahme der Dichte der Gesamtheit der Lichtauskoppelstrukturen 11 und 21 bzw. der Lichtauskoppelbereiche 12, 22 und 32 über mehrere Lichtleitelemente 10, 20 bzw. 30 realisiert. Besonders vorteilhaft nimmt die Dichte der Lichtauskoppelstrukturen 11 und 21 mit zunehmender Entfernung von dem Ort der Lichtquelle 101 zu, wie dies beispielswiese in Figur 7 skizziert ist, so dass die Abnahme an Intensität der Basisabstrahlung dadurch kompensiert ist.

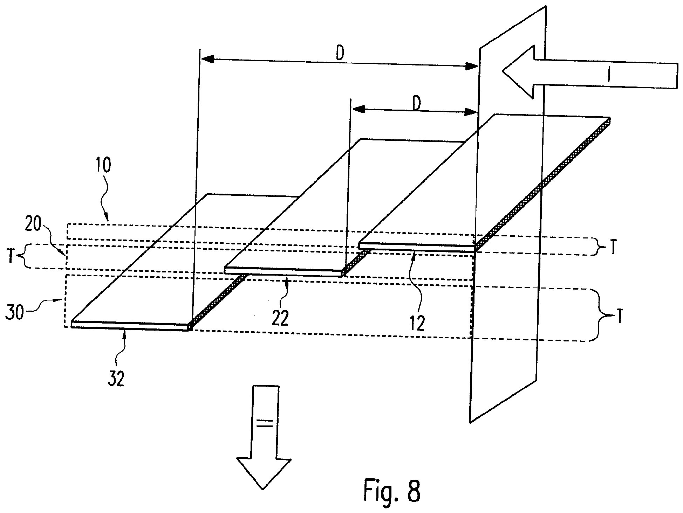

Figur 3c verdeutlicht weiterhin ein Zusammenwirken von mehreren Lichtleitelementen 10, 20 und 30. Die Lichtauskoppelstrukturen 11, 21 und 31 sind jeweils in einer für das jeweilige Lichtleitelement 10, 20 oder 30 charakteristischen Entfernung von der Lichteinstrahlfläche angeordnet. Die Lichtauskoppelstrukturen 11, 21 und 31 können dabei auf jedem Lichtleitelement 10, 20 bzw. 30 ein in etwa identisches Flächenmaß einnehmen; bevorzugt handelt es sich dabei um identische Lichtauskoppelstrukturen 11, 21 bzw. 31, welche in Lichtauskoppelbereichen 12, 22 bzw. 32 angeordnet sind. Das in eine Vorzugsrichtung der Lichtleitung I eingestrahlte Licht wird nun auf mehrere Lichtleitelemente 10, 20 und 30 verteilt. Die Lichtleitelemente können dabei eine unterschiedliche Dicke T (z.B. Figur 8) zueinander aufweisen, vorzugsweise sind sie jedoch so ausgebildet, dass sie eine identische Lichtintensität am Ort der Lichteinstrahlung in eine Vorzugsrichtung der Lichtleitung I führen und dazu beispielsweise eine identische Dicke T aufweisen können. Mit Hilfe der vorgesehenen Vielzahl von Lichtleitelementen 10, 20 und 30 kann nun sichergestellt werden, dass an einem beliebigen Ort der Lichtauskopplung eine definierte Lichtintensität zur Verfügung steht. Beispielsweise ist es nunmehr möglich eine definierte Lichtintensität durch das Lichtleitelement 10 an einen Ort nahe der Lichteinkopplung zu führen und abzustrahlen, während unabhängig davon, durch die Lichtleitelemente 20 und 30 an weiter entfernte Orte eine vorzugsweise identische Lichtintensität nahezu verlustfrei geführt und ausgekoppelt wird. Darüber hinaus bietet sich eine flexible Möglichkeit darin die zur Auskopplung zur Verfügung stehende Lichtintensität dadurch festzulegen, dass senkrecht zu einer Vorzugsrichtung der Lichtleitung I die Dicke T der Lichtleitelemente 10 bzw. 20 an eine Entfernung eines Ortes der zugeordneten Lichtquelle 101 von Lichtauskoppelbereichen 12, 22 bzw. 32 angepasst ist. Dies kann sich insbesondere auch nur auf eine Teilkombination von Lichtleitelementen 10, 20 bzw. 30 erstrecken. Beispielsweise könnte eines der Lichtleitelemente 10, 20 oder 30 oder ein separates Lichtleitelement dazu vorgesehen sein, eine Basislichtabstrahlung zu bewirken, welche mit zunehmender Entfernung von dem Ort der Lichtquelle an Intensität geringer wird. Es müsste also zur Aufrechterhaltung einer homogenen Lichtabstrahlung mit zunehmender Entfernung D von der Lichtquelle 101 eine größere Lichtintensität ausgekoppelt werden. Dies kann beispielsweise in einfacher Art und Weise durch eine Anordnung gemäß Figur 8 erreicht werden. Die Basislichtabstrahlung könnte beispielsweise durch ein nicht dargestelltes Lichtleitelement erfolgen. Eine geeignete Anpassung der zur Ergänzung ausgekoppelten Lichtintensität erfolgt nun dadurch, dass die Dicke T der Lichtleitelemente 10, 20 bzw. 30 mit der Entfernung D eines Orts der zugeordneten Lichtquelle 101 von Lichtauskoppelbereichen 12, 22 bzw. 32 zunimmt.

Insbesondere bringt die leichte Anpassbarkeit der ausgekoppelten Lichtintensität weitere Vorteile mit sich. Im Ausführungsbeispiel von Figur 1 erweist sich unter den gegebenen Randbedingungen die Kombination der Lichtleitelemente 10 und 20 mit einer Prismenplatte 103 zur Lichtlenkung als besonders vorteilhaft. Jedoch ist hinlänglich bekannt, dass bei regelmäßigen Strukturen wie sie beispielsweise durch die Prismenplatte 103 und möglicherweise durch Lichtauskoppelstrukturen 11 und 21 vorgegeben sind, bei einer ungünstigen Anordnung der Moire-Effekt zu einer inhomogenen Lichtabstrahlung führt. Mit Hilfe der flexibel anpassbaren Rate der Lichtauskopplung besteht somit die Möglichkeit eine Regelmäßigkeit der Lichtauskoppelungsstrukturen 11 bzw. 21 zu wählen, welche so an die Regelmäßigkeit der Prismenplatte 103 angepasst ist, dass der Moire-Effekt unterdrückt wird. Beispielsweise kann die Länge der Auskoppelbereiche so gewählt werden, dass der Moire-Abstand nicht erreicht wird. Darüber hinaus kann vorgesehen sein, dass sich die Regelmäßigkeiten der jeweiligen Auskoppelbereiche 12 bzw. 22 untereinander bzw. gegenüber der Prismenplatte 103 mindestens um den Faktor 2 unterscheiden.

Vorzugsweise kann die Prismenplatte 103 auch als Bestandteil der Anordnung zur Lichtauskopplung aufgefasst werden. Insbesondere könnte die Funktion der Lichtlenkung einer Prismen- oder Mikroprismenplatte zugedacht sein, welche integral einem Lichtleitelement 10 oder 20 zugeordnet sein kann und gleichzeitig die Funktion der Lichtauskopplung aus dem zugeordneten Lichtleitelement 10 oder 20 wahrnimmt.

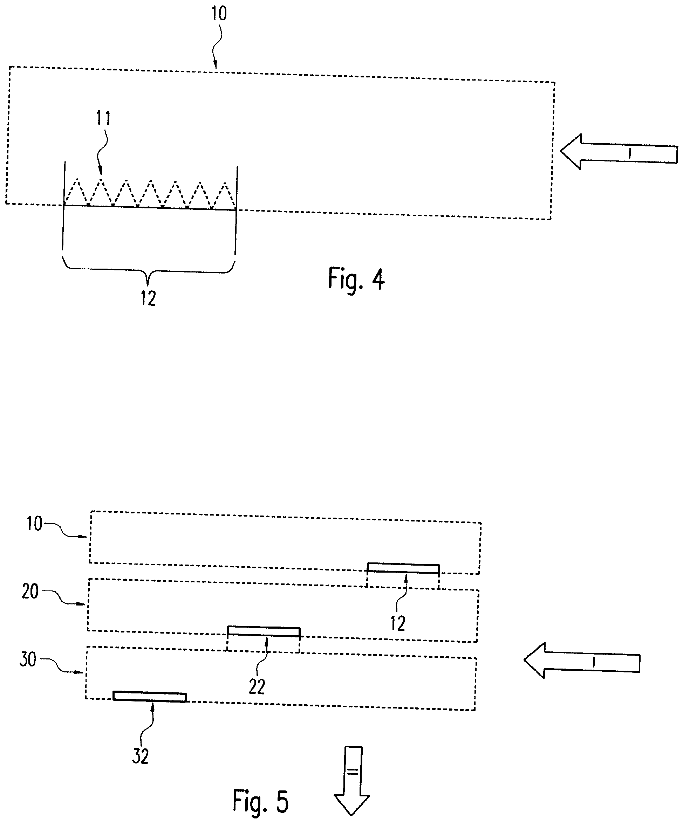

Durch das ergänzende Zusammenwirken der erfindungsgemäß vorgesehenen mehreren Lichtleitelemente 10 und 20 kann in einem Ausführungsbeispiel vorgesehen sein, dass die Lichtleitelemente 10 und 20 jeweils Lichtauskoppelbereiche 12 und 21 aufweisen, in welchen mehrere Lichtauskoppelstrukturen 11 und 21 so angeordnet sind, dass die räumliche Dichte der Lichtauskoppelstrukturen 11 und 21 konstant ist. Dies ist beispielsweise für ein einzelnes Lichtleitelement 10 in Figur 4 dargestellt. Beispielsweise kann eine solche konstante Dichte eine Basisabstrahlung festlegen, welche vorzugsweise durch eine Anordnung gemäß Figur 7 zu einer homogenen Lichtabstrahlung ergänzt wird. Die jeweiligen Lichtleitelemente 10, 20 oder 30 können dabei Lichtauskoppelbereiche 12, 22 bzw. 32 mit identischer Dichte der Lichtauskoppelstrukturen aufweisen. Insbesondere ist damit die Wahl einer Regelmäßigkeit der Lichtauskoppelstrukturen in einfacher Weise so möglich, dass der Moire-Effekt vermieden wird.

Darüber hinaus ist die Nutzung und Beachtung von Streulicht von entscheidender Bedeutung zur Verbesserung einer homogenen Lichtabgabe.

In einer Ausführungsform der Erfindung ist beispielsweise vorgesehen, dass die Lichtauskoppelstrukturen so angeordnet sind, dass die durch die gemeinsame Richtung der Lichtabstrahlung II festgelegte Flächenprojektion der Lichtleitelemente 10, 20 und 30 durch die Gesamtheit der Lichtauskoppelstrukturen 11, 21 und 31 vollständig bedeckt ist. Insbesondere kann sich jedoch die Bedeckung auf die durch die Lichtaustrittsöffhung einer Leuchte 100 sichtbare Projektion der Lichtleitelemente 10 20 und 30 beschränken. Somit ist gewährleistet, dass die Gesamtlichtabstrahlung aus der Leuchte 100 keinen Bereich aufweist der nur von Streulicht abhängt.

Neben der bereits angeführten nicht erfindungsgemäßen Möglichkeit die Streulichteffekte dadurch zu minimieren, dass die Projektionen P der Lichtauskoppelbereiche 10, 20 und 30 nicht überlappen, könnte weiterhin eine besserer Kontrollierbarkeit der Streulichteffekte in einer Weiterbildung angestrebt werden.

Beispielsweise könnte - wie in Figur 9 dargestellt - dazu vorgesehen sein, dass räumlich benachbarte Lichtauskoppelstrukturen 11 und 21, welche unterschiedlichen Lichtleitelementen 10 bzw. 20 zugeordnet sind, an benachbarten Seiten der plattenförmigen Lichtleitelemente 10 bzw. 20 ausgebildet sind. Somit ist eine unterschiedliche Divergenz der Streukegel der Lichtauskoppelstrukturen 11 bzw. 21, welche aus einer Beschränkung aufgrund verschiedener Einbaulagen der Lichtleitelemente 10 und 20 in der Leuchte 100 resultiert, weitgehend unterdrückt.

Besonders im Fall von mehr als zwei Lichtleitelementen kann jedoch auch - speziell aus Gründen der Regelmäßigkeit und somit leichten Anpassbarkeit - vorgesehen sein, dass die Auskoppelstrukturen 11 und 21 an jeweils der gleichen Seite des entsprechenden plattenförmigen Lichtleitelements 10 und 20 ausgebildet sind.

Eine Lichtauskopplung unter einem geringen Streulichtanteil kann weiterhin dadurch erreicht werden, dass die Lichtleitelemente 10 oder 20 im Bereich der Lichtauskoppelstrukturen 11 oder 21 so in Kontakt stehen, dass die in Richtung der gemeinsamen Lichtabstrahlung II folgenden Lichtleitelemente 10 oder 20 im Wesentlichen verlustfrei durchstrahlt werden. Beispielsweise könnte dies dadurch erfolgen, dass die Lichtleitelemente 10 bzw. 20, welche sonst voneinander beabstandet sind an dieser Stelle aufeinander aufliegen, wie dies beispielsweise in Figur 5 dargestellt ist.

Vorzugsweise könnte die Beabstandung auch dadurch realisiert werden, dass die Lichtleitelemente mittels eines Klebers so verbunden sind, dass unabhängige Lichtleiteigenschaften der Lichtleitelemente 10 und 20 resultieren. Insbesondere muss ein Kleber mit geeignetem Brechungsindex in einer ausreichenden Dicke aufgetragen werden um eine solche "Sandwich" Konstruktion zu realisieren. Eine verlustfreie Durchstrahlung der Lichtleitelemente 10 bzw. 20 im Bereich der Lichtauskoppelstrukturen 11 oder 21 könnte dann beispielsweise dadurch gegeben sein, dass die jeweiligen Lichtleitelemente 10 bzw. 20 an dieser Stelle mit einem Material verbunden sind, welches dem Brechungsindex des Materials der Lichtleitelemente 10 bzw. 20 am nächsten kommt oder identisch ist.

In einer Weiterbildung ist darüber hinaus denkbar, dass sowohl die Lichtleitung als auch die Lichtauskoppelung dadurch unterstützt werden, dass die Lichtleitelemente 10, 20 bzw. 30 Verspiegelungen aufweisen, wie dies beispielsweise in Figur 10 dargestellt ist.

Zum einen könnte die Lichtleitung dadurch verbessert werden, dass die Oberflächen der Lichtleitelemente 10, 20 bzw. 30, vorzugsweise auf mehreren Seiten, Verspiegelungen in der Art aufweisen, dass austretendes Licht in den Lichtleiter zurückreflektiert wird und weiterhin in der Vorzugsrichtung der Lichtleitung I geführt werden kann.

Darüber hinaus könnten die Verspiegelungen aber auch als Lichtauskopplungsstruktur 11 oder 21 dienen. In einer Weiterbildung der Erfindung können die Verspiegelungen beispielsweise so angeordnet sein, dass Streulichteffekte minimiert sind. D. h. die Verspiegelungen sind, zur Begrenzung von Streukegeln von in Vorzugsrichtung der Lichtleitung I benachbarten, jedoch auf unterschiedlichen Lichtleitelementen 10 bzw. 20 angeordneten Lichtauskoppelbereichen 12 bzw. 22, auf einem in Richtung der gemeinsamen Lichtabstrahlung II gesehen nachfolgend angeordnetem Lichtleitelement 10 bzw. 20 so orientiert, dass die Begrenzung der Verspiegelung unmittelbar mit der Begrenzung des benachbarten Lichtauskoppelbereichs 12 bzw. 22 zusammenfällt.

Ferner kann auch vorgesehen sein, die Verspiegelung so auszuführen, dass sie die Funktion eines Reflektors 102 erfüllen kann. Dazu kann beispielsweise vorgesehen sein, eine Oberflächenseite der Lichtleitelemente 10 bzw. 20 vollständig zu verspiegeln.

Erfindungsgemäß ist somit eine flexible Lösung zur Verbesserung einer homogenen Lichtabstrahlung vorgeschlagen, welche es gestattet, Bereiche, die zu einer inhomogenen Lichtabstrahlung beitragen, gezielt in ihrer Lichtabstrahlungseigenschaft zu modifizieren. Somit ist die erfindungsgemäße Anordnung zur Lichtabgabe auf einfache Art und Weise an vielfältige Anwendungen anpassbar.

## Patentansprüche

1. Anordnung zur Lichtabgabe für die Raumbeleuchtung, mit
- mindestens einer Lichtquelle (101), vorzugsweise einer LED-Lampe, und
- zumindest zwei plattenförmigen Lichtleitelementen (10, 20), welche jeweils eine Lichteintrittsfläche (18), durch welche Licht in das Lichtleitelement (10, 20) einkoppelbar ist, sowie eine Lichtaustrittsfläche aufweisen, wobei in die Lichtleitelemente (10, 20) über die Lichteintrittsfläche (18) eingekoppeltes Licht in einer Vorzugsrichtung der Lichtleitung (I) im Wesentlichen parallel zu der jeweiligen Lichtaustrittsfläche geführt und mit Hilfe von in bzw. an dem Lichtleitelement (10, 20) vorgesehenen Lichtauskoppelstrukturen (11, 21) über die jeweilige Lichtaustrittsfläche abgegeben wird,
- wobei die Lichtleitelemente(10, 20) im Wesentlichen parallel zueinander ausgerichtet sind und die gleiche Lichtabstrahlrichtung (II) aufweisen,
- wobei die Lichtleitelemente in Lichtabstrahlrichtung (II) hintereinander angeordnet sind,
- wobei von der Lichtquelle (101) abgegebenes Licht gleichzeitig in mehrere Lichtleitelemente (10, 20) der Anordnung eingekoppelt wird,
- wobei die Lichtleitelemente (10, 20) fernerhin Lichtauskoppelbereiche (12, 22) aufweisen, in welchen mehrere Lichtauskoppelstrukturen (11, 21) so ausgebildet sind, dass die jeweilige räumliche Dichte der Lichtauskoppelstrukturen (11, 21) konstant ist, **dadurch gekennzeichnet,**
**dass** die Lichtauskoppelbereiche (12, 22) so angeordnet sind, dass die Projektionen (P) der Lichtauskoppelbereiche (12, 22) in der gemeinsamen Richtung der Lichtabstrahlung (II) überlappen, sodass die Gesamtheit der Lichtauskoppelstrukturen (11, 21) eine zunehmende räumliche Dichte mit zunehmender Entfernung (D) von dem Ort der zugeordneten Lichtquelle (101) aufweist.

2. Anordnung zur Lichtabgabe nach einem der vorhergehenden Ansprüche,
**dadurch gekennzeichnet,**
**dass** die Lichteintrittsflächen (18) der Lichtleitelemente (10, 20) im Wesentlichen parallel einem Aussenumfang der Lichtquelle (101) folgen.

3. Anordnung zur Lichtabgabe nach einem der vorhergehenden Ansprüche,
**dadurch gekennzeichnet,**
**dass** die Lichtauskoppelstrukturen (11, 21) so ausgebildet sind, dass die durch die gemeinsame Richtung der Lichtabstrahlung (II) festgelegte Flächenprojektion der Lichtlichtleitelemente (10,20) durch die Gesamtheit der Lichtauskoppelstrukturen (11, 21) vollständig bedeckt ist.

4. Anordnung zur Lichtabgabe nach einem der vorhergehenden Ansprüche,
**dadurch gekennzeichnet,**
**dass** senkrecht zur gemeinsamen Richtung der Lichteinstrahlung (I), eine Dicke (T) der Lichtleitelemente (10, 20) an eine Entfernung (D) eines Orts der zugeordneten Lichtquelle (101) von Lichtauskoppelbereichen (12, 22, 32), welche jeweils mehrere Lichtauskoppelstrukturen (11, 21) aufweisen, angepasst ist.

5. Anordnung zur Lichtabgabe nach einem der vorhergehenden Ansprüche,
**dadurch gekennzeichnet, dass**
die Lichtleitelemente (10, 20) jeweils im Bereich der Lichtauskoppelstrukturen (11, 21) so miteinander in Kontakt stehen, dass die in Richtung der gemeinsamen Lichtabstrahlung (II) folgenden Lichtleitelemente(10, 20) im Wesentlichen verlustfrei durchstrahlt werden.

6. Anordnung zur Lichtabgabe nach einem der vorhergehenden Ansprüche,
**dadurch gekennzeichnet,**
**dass** alle Lichtauskoppelstrukturen (11, 21) an jeweils der gleichen Seite des entsprechenden plattenförmigen Lichtleitelements (10, 20) ausgebildet sind.

7. Anordnung zur Lichtabgabe nach einem der vorhergehenden Ansprüche 1 bis 5, **dadurch gekennzeichnet,**
**dass** räumlich benachbarte Lichtauskoppelstrukturen (11,21), welche auf unterschiedlichen Lichtleitelementen (10, 20) ausgebildet sind, auf benachbarten Seiten der plattenförmigen Lichtleitelemente (10, 20) ausgebildet sind.

8. Anordnung zur Lichtabgabe nach einem der vorhergehenden Ansprüche,
**dadurch gekennzeichnet, dass**
die Anordnung eine Prismenplatte (103) aufweist.

9. Anordnung zur Lichtabgabe nach einem der vorhergehenden Ansprüche,
**dadurch gekennzeichnet,**
**dass** die Lichtleitelemente (10, 20) senkrecht zu einer Vorzugsrichtung der Lichtleitung (I) Verspiegelungen (15) aufweisen.

10. Leuchte (100),
mit einem Gehäuse und einer in oder an dem Gehäuse angebrachten Anordnung zur Lichtabgabe nach einem der vorhergehenden Ansprüche.

11. Leuchte nach Anspruch 10,
**dadurch gekennzeichnet, dass**
die Leuchte (100) in Richtung der Lichtabgabe (II) gesehen hinter den Lichtleitelementen (10, 20) einen Reflektor (102) aufweist.

## Claims

1. An arrangement for the emission of light for room lighting, having
- at least one light source (101), preferably an LED lamp, and
- at least two plate-shaped light-guiding elements (10, 20), which in each case have a light entry surface (18), which can be coupled into the light guiding element (10, 20) as well as a light exit surface, wherein light coupled into the light guiding element (10, 20) via the light entry surface (18) is guided in a preferred direction of the light transmission (I) substantially parallel to the respective light exit surface and with the aid of light decoupling structures (11, 21) provided in or on the light guiding element (10, 20) is emitted via the respective light exit surface,
- wherein the light guiding elements (10, 20) are oriented substantially parallel to each other and have the same light emission direction (II),
- wherein the light guiding elements are arranged behind each other in the light emission direction (II),
- wherein light emitted from the light source (101) is at the same time coupled into several light guiding elements (10, 20) of the arrangement,
- wherein the light guiding elements (10, 20) furthermore have light decoupling regions (12, 22), in which several light decoupling structures (11, 21) are designed so that the respective spatial density of the light decoupling structures (11, 21) is constant,
**characterized in**
**that** the light decoupling regions (12, 22) are arranged so that the projections (P) of the light decoupling regions (12, 22) overlap in the common direction of the light emission (II), so that the entirety of the light decoupling structures (11, 21) has an increasing spatial density with increasing distance (D) from the location of the associated light source (101).

2. An arrangement for the emission of light according to any one of the preceding claims,
**characterized in**
**that** the light entry surfaces (18) of the light conducing elements (10, 20) follow substantially parallel to an outer periphery of the light source (101).

3. An arrangement for the emission of light according to any one of the preceding claims,
**characterized in**
**that** the light decoupling structures (11, 21) are designed so that the surface projection of the light guiding elements (10, 20) defined by the common direction of the light emission (II) is completely covered by the entirety of the light decoupling structures (11, 21).

4. An arrangement for the emission of light according to any one of the preceding claims,
**characterized in**
**that** perpendicular to the common direction of the light irradiation (I), a thickness (T) of the light guiding elements (10, 20) is adapted to a distance (D) of a location of the associated light source (101) from the light decoupling regions (12, 22, 32), which in each case have several light decoupling structures (11, 21).

5. An arrangement for the emission of light according to any one of the preceding claims,
**characterized in that**
the light guiding elements (10, 20) are in each case in contact with each other in the region of the light decoupling structures (11, 21) such that the light guiding elements (10, 20) following in the direction of the common light emission (II) are transmitted through substantially without losses.

6. An arrangement for the emission of light according to any one of the preceding claims,
**characterized in**
**that** all light decoupling structures (11, 21) are formed in each case on the same side of the corresponding plate-shaped light guiding element (10, 20).

7. An arrangement for the emission of light according to any one of the preceding Claims 1 to 5,
**characterized in**
**that** spatially adjacent light decoupling structures (11, 21), which are formed on different light guiding elements (10, 20), are formed on adjacent sides of the plate-shaped light guiding elements (10, 20).

8. An arrangement for the mission of light according to any one of the preceding claims,
**characterized in that**
the arrangement has a prism plate (103).

9. An arrangement for the emission of light according to any one of the preceding claims,
**characterized in**
**that** the light guiding elements (10, 20) have mirror coatings (15) perpendicular to a preferred direction of the light transmission (I).

10. A lamp (100),
with a housing and an arrangement for the emission of light mounted in or on the housing according to any one of the preceding claims.

11. A lamp according to Claim 10,
**characterized in that**
the lamp (100) viewed in the direction of the light emission (II) has a reflector (102) behind the light guiding elements (10, 20).

## Revendications

1. Dispositif d'émission de lumière pour l'éclairage d'une pièce, avec
- au moins une source de lumière (101), de préférence d'une lampe LED et
- au moins deux éléments de guidage de lumière (10, 20) en forme de plaques, qui comprennent chacun une surface d'entrée de lumière (18), par laquelle la lumière peut être couplée dans l'élément de guidage de lumière (10, 20), ainsi qu'une surface de sortie de lumière, la lumière couplée dans les éléments de guidage de lumière (10, 20) par l'intermédiaire de la surface d'entrée de lumière (18) étant guidée dans une direction préférentielle de la conduction de lumière (I), de manière globalement parallèle à la surface de sortie de lumière et étant émise à l'aide de structures de découplage de lumière (11, 21) prévues dans ou sur l'élément de guidage de lumière (10, 20) par l'intermédiaire de la surface de sortie de lumière correspondante,
- les éléments de guidage de lumière (10, 20) étant orientés globalement de manière parallèle entre eux et présentant la même direction de rayonnement (II),
- les éléments de guidage de lumière étant disposés les uns derrière les autres dans la direction de rayonnement (II),
- la lumière émise par la source de lumière (101) étant couplée simultanément dans plusieurs éléments de guidage de lumière (10, 20) du dispositif,
- les éléments de guidage de lumière (10, 20) comprenant en outre des zones de découplage de lumière (12, 22), dans lesquelles sont réalisées plusieurs structures de découplage de lumière (11, 21), de façon à ce que la densité spatiale correspondante des structures de découplage de lumière (11, 21) soit constante,
**caractérisé en ce que**
les zones de découplage de lumière (12, 22) sont disposées de façon à ce que les projections (P) des zones de découplage de lumière (12, 22) se superposent dans la direction commune du rayonnement (II), de façon à ce que l'ensemble de structures de découplage de lumière (11, 21) présentent une densité spatiale croissante lorsque la distance (D) par rapport au lieu de la source de lumière (101) augmente.

2. Dispositif d'émission de lumière selon l'une des revendications précédentes,
**caractérisé en ce que**
les surfaces d'entrée de lumière (18) des éléments de guidage de lumière (10, 20) suivent globalement parallèlement une circonférence extérieure de la source de lumière (101).

3. Dispositif d'émission de lumière selon l'une des revendications précédentes,
**caractérisé en ce que**
les structures de découplage de lumière (11, 21) sont conçues de façon à ce que la projection de surface, déterminée par la direction commune du rayonnement (II), des éléments de guidage de lumière (10, 20), soit entièrement recouverte par l'ensemble des structures de découplage de lumière (11, 21).

4. Dispositif d'émission de lumière selon l'une des revendications précédentes,
**caractérisé en ce que**
perpendiculairement à la direction commune de l'irradiation (I), une épaisseur (T) des éléments de guidage de lumière (10, 20) est adaptée à une distance (D) du lieu de la source de lumière (101) correspondante par rapport aux zones de découplage de lumière (12, 22, 32), qui comprennent chacune plusieurs structures de découplage de lumière (11, 21).

5. Dispositif d'émission de lumière selon l'une des revendications précédentes,
**caractérisé en ce que**
les éléments de guidage de lumière (10, 20) sont en contact entre eux au niveau des structures de découplage de lumière (11, 21) correspondantes, de façon à ce que les éléments de guidage de lumière (10, 20) suivants dans la direction de rayonnement (II) commune soient traversés globalement sans pertes.

6. Dispositif d'émission de lumière selon l'une des revendications précédentes,
**caractérisé en ce que**
toutes les structures de découplage de lumière (11, 21) sont réalisées sur le même côté de l'élément de guidage de lumière (10, 20) en forme de plaque correspondant.

7. Dispositif d'émission de lumière selon l'une des revendications 1 à 5,
**caractérisé en ce que**
les structures de découplage de lumière (11, 21) adjacentes dans l'espace, qui sont réalisées sur différents éléments de guidage de lumière (10, 20), sont réalisées sur des côtés adjacents des éléments de guidage de lumière (10, 20) en forme de plaques.

8. Dispositif d'émission de lumière selon l'une des revendications précédentes,
**caractérisé en ce que**
le dispositif comprend une plaque prismatique (103).

9. Dispositif d'émission de lumière selon l'une des revendications précédentes,
**caractérisé en ce que**
les éléments de guidage de lumière (10, 20) comprennent des miroirs (15) perpendiculairement à une direction préférentielle de la conduction de lumière (I).

10. Luminaire (100),
avec un boîtier et un dispositif, monté dans ou sur le boîtier, pour l'émission de lumière, selon l'une des revendications précédentes.

11. Luminaire selon la revendication 10,
**caractérisé en ce que**
le luminaire (100) comprend, derrière les éléments de guidage de lumière (10, 20), vu dans la direction de l'émission de lumière (II), un réflecteur (102).
